# FASCICULE DE BREVET EUROPEEN

(11) **EP 2 867 169 B1**
(45) Date de publication et mention de la délivrance du brevet: **06.04.2016**
(21) Numéro de dépôt: 13744597.9
(22) Date de dépôt: 19.06.2013
(51) Int. Cl.: C01G 39/06, C01G 9/08, C01B 3/04, B01J 27/00, B01J 37/03, B01J 37/06, B01J 37/20, B01J 37/34, B01J 19/12, B01J 23/46, B01J 27/04, B01J 27/051, B01J 27/053, B01J 35/00, B01J 37/02, B82Y 30/00, B01J 35/02

(54) **PHOTOCATALYSEUR COMPOSITE A BASE DE SULFURES METALLIQUES POUR LA PRODUCTION D'HYDROGENE**
METALLSULFIDBASIERTER VERBUNDKATALYSATOR ZUR HERSTELLUNG VON WASSERSTOFF
METAL SULPHIDE-BASED COMPOSITE PHOTOCATALYST FOR PRODUCING HYDROGEN

(30) Priorité: 29.06.2012 FR 1201853
(43) Date de publication de la demande: 06.05.2015
(73) Titulaire: IFP Énergies nouvelles, 92852 Rueil-Malmaison Cedex (FR); CNRS, 75794 Paris Cedex 16 (FR)
(72) Inventeur: FECANT, Antoine, 69530 Brignais (FR); UZIO, Denis, 69230 Saint Genis Laval (FR); LOFFICIAL, Dina, 69006 Lyon (FR); PUZENAT, Eric, 69006 Lyon (FR); BLANCO, Elodie, 69100 Villeurbanne (FR); AFANASIEV, Pavel, 69150 Decines (FR); BERHAULT, Gilles, 69008 Lyon (FR)
(86) Numéro de dépôt international: PCT/FR2013/051431
(87) Numéro de publication internationale: WO 2014/001691

(56) Documents cités:
- US-A1- 2003 206 847
- US-A1- 2012 034 154
- JUN ZHANG ET AL: "Visible Light Photocatalytic H 2 -Production Activity of CuS/ZnS Porous Nanosheets Based on Photoinduced Interfacial Charge Transfer", NANO LETTERS, vol. 11, no. 11, 9 novembre 2011 (2011-11-09), pages 4774-4779, XP55060504, ISSN: 1530-6984, DOI: 10.1021/nl202587b
- QUANJUN XIANG ET AL: "Synergetic Effect of MoS 2 and Graphene as Cocatalysts for Enhanced Photocatalytic H 2 Production Activity of TiO 2 Nanoparticles", JOURNAL OF THE AMERICAN CHEMICAL SOCIETY, vol. 134, no. 15, 18 avril 2012 (2012-04-18), pages 6575-6578, XP55060506, ISSN: 0002-7863, DOI: 10.1021/ja302846n
- XU ZONG ET AL: "Enhancement of Photocatalytic H 2 Evolution on CdS by Loading MoS 2 as Cocatalyst under Visible Light Irradiation", JOURNAL OF THE AMERICAN CHEMICAL SOCIETY, vol. 130, no. 23, 1 juin 2008 (2008-06-01) , pages 7176-7177, XP55060536, ISSN: 0002-7863, DOI: 10.1021/ja8007825

## Description

Le domaine de l'invention est celui des photocatalyseurs et plus spécifiquement des photocatalyseurs permettant la production de dihydrogène.

La présente invention concerne une composition à base de sulfures métalliques, son procédé de préparation ainsi que son utilisation en photocatalyse notamment pour la production d'hydrogène à partir d'une charge comprenant de l'eau et/ou du sulfure d'hydrogène et/ou toute autre source de protons.L'objet de l'invention est de proposer une composition utilisable comme photocatalyseur à performances améliorées en termes d'activité et de stabilité appliquée au procédé de production de dihydrogène, ainsi qu'un mode de préparation de ce catalyseur.

Une partie de l'irradiation solaire touchant la surface de la terre peut être convertie en énergie chimique par production de dihydrogène (H₂) via la dissociation photocatalytique de composés source de protons tels que l'eau (H₂O) ou le sulfure d'hydrogène (H₂S).

Le dihydrogène étant une molécule propre et dense en énergie, la production de cette molécule par photocatalyse pourrait répondre aux considérations environnementales toujours plus fortes et aux besoins énergétiques mondiaux grandissant. En effet, le dihydrogène peut être utilisé directement en tant que carburant pour les moteurs à combustion interne pour le transport, ou pour la génération d'énergie électrique dans des piles. L'eau étant l'unique produit final issu de ces réactions, aucun polluant n'est alors produit.

### ART ANTÉRIEUR

Des photocatalyseurs pour la production de dihydrogène sont connus dans l'état de la technique.

Ainsi, il est connu (Catal. Lett., 34, p. 245 (1995)) d'utiliser un photocatalyseur à base de TiO₂ sur lequel est déposé des particules métalliques de platine pour dissocier de l'eau liquide pure sous un rayonnement Ultra-violet (UV).

Il est connu du document WO2011/011064 d'utiliser des photocatalyseurs de type nanoparticules comprenant un coeur métallique (Ag, Pd, Pt, Au) et une couche de semiconducteur (TiO₂, ZnS, Nb₂O₅) pour la production de dihydrogène par photolyse de l'eau.

Il est connu (Int. J. Hydrogen Energy, 25, p. 953 (2000)) d'utiliser un photocatalyseur à base de InP sur lequel est déposé des nanoparticules de Pt pour la production de dihydrogène à partir d'une solution aqueuse de Na₂S sous rayonnement UV.

De nombreuses études ont proposé l'utilisation du semiconducteur CdS sous rayonnement visible pour la production de dihydrogène à partir d'une solution aqueuse de Na₂S + Na₂SO₄ suivant qu'il soit mis en oeuvre avec des particules métalliques de Pt (J. Phys. Chem., 87, p. 3807 (1983)), ZnS (J. Photochem. Photobiol. A, 157, p. 87 (2003)), TiO₂ et des nanoparticules de Pt (J. Mater. Chem., 18, p. 2379 (2008)). Un photocatalyseur fonctionnant également dans le visible à base de CdS-MoS₂ a également été étudié (J. Am. Chem. Soc. 130, p. 7176 (2008)) pour la production d'H₂ directement à partir d'acide lactique.

D'autres photocatalyseurs de type sulfure métallique (Na₁₄In₁₇Cu₃S₃₅, x H₂O, Angew. Chem, 117, p. 5433 (2005)) ou oxysulfures (Sm₂Ti₂S₂O₅, J. Am. Chem. Soc., 124, p. 13547 (2002)) ont été reportés dans la littérature pour la production de dihydrogène sous lumière visible par dissociation photocatalytique d'une solution aqueuse de Na₂S ou de méthanol.

Il est également connu de produire du dihydrogène sous rayonnement visible à partir d'une solution alcaline dans laquelle passe un flux d'H₂S en présence de photocatalyseurs de type CdIn₂S₄ (Adv. Funct. Mater., 16, p.1349 (2006)), CuGa₁₋ₓInₓO₂ (Catalysis Communications, 9, p. 395 (2008) et FeGaO₃ (Int. J. Hydrogen Energy, 33, p. 6586 (2008)).

Enfin, il est connu des travaux de Can Li et al. (Chinese Journal of Catalysis, 29(4), p. 313 (2008)) et des travaux de Jun Zhang et al (Nano letters, 11 (11), pages 4774 à 4779 , (2011)) d'utiliser un photocatalyseur à base de ZnS dopé (au Cu par exemple) en présence de particules de métal noble pour la production de dihydrogène par dissociation photocatalytique d'un flux d'H₂S en phase gaz sous irradiation UV-Vis.

Cependant, les photocatalyseurs proposés dans l'état de l'art pour ce type de procédé présentent des rendements faibles et sont surtout généralement soumis à une forte désactivation tout au long du cycle photocatalytique. De même, certains photocatalyseurs proposés dans l'état de l'art ne sont activés que sous un rayonnement UV et non sous un rayonnement visible.

L'objet de l'invention est ainsi de proposer une nouvelle composition utilisable comme photocatalyseur à performances améliorées en termes d'activité et de stabilité appliquée au procédé de production de dihydrogène à partir d'une charge comprenant de l'eau et/ou du sulfure d'hydrogène et/ou toute autre source de protons en présence d'un rayonnement émettant dans le spectre UV et/ou le spectre visible.

De manière surprenante, la demanderesse a découvert que des compositions comprenant un mélange de sulfure de zinc (ZnS) et de sulfure de molybdène (MoSₓ) et respectant un certain ratio molaire Mo/Zn sont actifs et particulièrement stables dans un procédé de production de dihydrogène.

La présente invention décrit ainsi un nouveau type de photocatalyseur qui, de par de ses composants et le respect d'un certain ratio entre eux, permet d'obtenir un photocatalyseur stable, c'est-à-dire que la perte d'activité dans la réaction de production de dihydrogène dans le temps est moins importante que celle des catalyseurs connus de l'état de l'art pour cette même réaction. De plus, les photocatalyseurs selon l'invention ne sont pas seulement activés par un rayonnement UV, mais également par un rayonnement visible. Ceci permet d'utiliser plus efficacement l'énergie solaire terrestre, notamment la lumière naturelle émise par le soleil.

La présente invention concerne également un procédé de préparation de cette composition photocatalytique, ainsi que son utilisation dans un procédé de production de dihydrogène à partir d'une charge comprenant de l'eau et/ou du sulfure d'hydrogène et/ou toute autre source de protons en présence d'un rayonnement émettant dans le spectre UV et/ou le spectre visible.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

### DESCRIPTION DÉTAILLÉE DE L'INVENTION

L'invention concerne une composition à base de sulfure de métaux de transition, son procédé de préparation, ainsi que son utilisation en photocatalyse et notamment dans un procédé de production de dihydrogène.

### Catalyseur selon l'invention

Plus particulièrement, l'invention concerne une composition comprenant un mélange de sulfure de zinc (ZnS) et de sulfure de molybdène (MoSₓ), et dans laquelle le ratio molaire Mo/Zn est compris entre 0,01 et 1,9, de préférence compris entre 0,5 et 1,5. Le ratio est calculé sur la base des éléments Mo et Zn.

La composition comprenant le mélange de sulfure de zinc (ZnS) et de sulfure de molybdène (MoSₓ) est de préférence sous forme de nanoparticules. La taille des nanoparticules du sulfure de zinc et du sulfure de molybdène est généralement inférieure à 1 µm (1000nm), et de préférence comprise entre 10 et 500 nm, de manière plus préférée comprise entre 10 et 200 nm.

D'une manière générale, on cherche à obtenir des petites tailles de particules permettant d'augmenter le ratio surface/volume afin d'obtenir une grande surface disponible pour les espèces réactives photogénérées. La surface de la composition selon l'invention est généralement comprise entre 10 et 100 m²/g, de préférence elle est comprise entre 20 et 80 m²/g.

On entend par la formule (MoSₓ) du sulfure de molybdène dans lequel le x est compris entre 2 et 3. On peut alors avoir le sulfure de molybdène sous sa forme MoS₂, MoS₃ ou un mélange des deux. De préférence il est sous forme MoS₂.

La teneur du mélange de sulfure de zinc (ZnS) et de sulfure de molybdène (MoSₓ) dans la composition est généralement supérieure à 20 % en masse, de préférence supérieure à 50% en masse, et de manière encore plus préférée supérieure à 90% en masse. La composition selon l'invention peut comprendre un support poreux, généralement sous forme d'oxydes, comme par exemple l'alumine (Al₂O₃), la silice (SiO₂), l'oxyde de titane (TiO₂), la cérine (CeO₂) et la zircone (ZrO₂). De manière très préférée, la composition contient qu'un mélange de sulfure de zinc et de sulfure de molybdène, éventuellement complétée avec au moins un métal du groupe VIII et/ou du groupe IB sous sa forme métallique ou sulfure. En tant que catalyseur, elle se présente alors sous sa forme massique.

La composition peut se présenter sous forme de billes, d'extrudés, de pastilles, ou sous poudre ; elle se présente de préférence sous poudre.

Selon une variante, la composition selon l'invention peut comprendre en outre au moins un métal du groupe VIII et/ou du groupe IB sous sa forme métallique ou sulfure. Dans le cas où deux métaux sont présents, ils peuvent être sous forme d'un alliage. De préférence, le métal du groupe VIII et/ou du groupe IB est choisi parmi le platine, le palladium, l'or, le nickel, le cobalt, le ruthénium ou le rhodium.

La teneur du métal du groupe VIII et/ou du groupe IB sous sa forme métallique ou sulfure sur la composition selon l'invention est généralement comprise entre 0,01 et 5 % en masse de métal sur la composition, de manière préférée comprise entre 0,1 et 2 % en masse de métal.

Le fait que la composition selon l'invention comprenne en outre au moins un métal du groupe VIII et/ou du groupe IB sous sa forme métallique ou sulfure (comme co-catalyseur) permet d'augmenter l'activité des photocatalyseurs par une séparation accrue des charges et une adsorption améliorée des réactifs.

### Préparation de la composition

La composition selon l'invention peut être préparée selon tout mode de préparation connu de l'homme de métier.

Selon une première variante, la composition selon l'invention peut être préparée par un mélange mécanique de ZnO et de MoO₃ dans un ratio permettant d'atteindre un ratio Mo/Zn compris entre 0,01 et 1,9, de préférence compris entre 0,5 et 1,5. Le ZnO et de MoO₃ sont de préférence sous forme de nanoparticules. Les deux poudres sont mélangées sous agitation, de préférence à température ambiante, dans un réacteur par un système d'arbre d'agitation, généralement pendant 6h à 48h, de préférence pendant 12 à 24h, et à une vitesse de rotation généralement de 10 à 500 tours par minutes, de préférence de 25 à 100 tours par minutes.

Afin d'obtenir les phases sulfures métalliques, il est nécessaire de faire ensuite subir au mélange d'oxydes un traitement sulfo-réducteur à haute température. Cette étape de sulfuration s'effectue par les méthodes bien connues de l'homme de l'art, et avantageusement sous une atmosphère sulfo-réductrice en présence d'hydrogène et d'hydrogène sulfuré, afin de transformer les oxydes métalliques en sulfures tels que par exemple, le MoSₓ et le ZnS. La sulfuration est réalisée en injectant sur le mélange d'oxydes un flux contenant de l'H₂S et du dihydrogène, d'où bien un composé soufré susceptible de se décomposer en H₂S en présence du catalyseur et de l'hydrogène. Les polysulfures tels que le diméthyldisulfure sont des précurseurs d'H₂S couramment utilisés pour sulfurer les catalyseurs. On emploi par exemple un flux contenant 15 % en volume l'H₂S et 85 % en volume de dihydrogène. La température est ajustée afin que l'H₂S réagisse avec les oxydes métalliques pour former des sulfures métalliques. Cette sulfuration peut etre réalisée à des températures comprises entre 500 et 900 °C et plus préférentiellement entre 600 et 800 °C. La durée de la sulfuration est généralement comprise entre 0,5 heures et 5 heures, de préférence entre 0,5 et 2 heures.

Selon une deuxième variante, la composition selon l'invention peut être préparée par un mélange mécanique de ZnS et de MoS₂ dans un ratio permettant d'atteindre un ratio Mo/Zn compris entre 0,01 et 1,9, de préférence compris entre 0,5 et 1,5. Le ZnS et le MoS₂ sont de préférence sous forme de nanoparticules. Les deux poudres sont mélangées sous agitation, de préférence à température ambiante, dans un réacteur par un système d'arbre d'agitation, généralement pendant 6h à 48h, de préférence pendant 12 à 24h, et à une vitesse de rotation généralement de 10 à 500 tours par minutes, de préférence de 25 à 100 tours par minutes.

Selon une troisième variante, particulièrement préférée, la composition selon l'invention peut être préparée par synthèse glycothermale. Plus particulièrement, le procédé de préparation de la composition selon cette variante comprend les étapes suivantes :
a) on précipite un précurseur de molybdène en présence d'un composé soufré et de sulfure de zinc dans un solvant comprenant un polyol à une température comprise entre 150 et 250 °C, de manière à obtenir une solution contenant une composition comprenant un mélange d'un précipité de sulfure de zinc et d'un précipité de sulfure de molybdène,
b) on sépare la composition obtenue à l'étape a) de la solution, puis on lave éventuellement ladite composition, et on sèche ladite composition,
c) on sulfure la composition obtenue à l'étape b) en présence d'un flux contenant de l'H₂S et de l'hydrogène.

Le sulfure de zinc peut être synthétisé au préalable. Plus particulièrement, l'étape a) peut comprendre les sous-étapes suivantes :
a') on mélange une solution aqueuse contenant au moins un précurseur ionique de zinc à une solution aqueuse contenant un composé soufré de manière à obtenir un précipité de sulfure de zinc,
a") on sépare le précipité de sulfure de zinc obtenu à l'étape a') de la solution aqueuse, on le lave éventuellement, et on le disperse dans un solvant comprenant un polyol de manière à obtenir une solution comprenant ledit polyol dans laquelle le précipité de sulfure de zinc est dispersé,
a''') on mélange une solution contenant un polyol et au moins un précurseur ionique de molybdène à une solution contenant un polyol et un composé soufré à une température comprise entre 150 et 250 °C,
a"") on ajoute la solution obtenue à l'étape a"') à la solution obtenue à l'étape a"), préalablement préchauffée à une température comprise entre 150 et 250 °C, de manière à obtenir une composition comprenant un mélange d'un précipité de sulfure de zinc et d'un précipité de sulfure de molybdène.

Ainsi, dans étape a'), on mélange une solution aqueuse contenant au moins un précurseur ionique de zinc à une solution aqueuse contenant un composé soufré de manière à obtenir un précipité de sulfure de zinc. Le précurseur ionique de zinc peut être le nitrate ou le chlorure de zinc. Le composé soufré peut être le sulfure de sodium.

Dans l'étape a"), le précipité de sulfure de ZnS ainsi formé est séparé de la solution aqueuse, de préférence par centrifugation. Il est ensuite de préférence lavé, de préférence avec un alcool tel que l'éthanol, avant d'être dispersé dans un solvant comprenant un polyol. Le polyol est de préférence un alkylediol ayant de 2 à 8 atomes de carbone tel que le 1,4-butanediol, le 1,3-propanediol ou encore l'éthylène glycol. De préférence, le polyol est l'éthylène glycol.

Dans l'étape a"'), on mélange une solution contenant un polyol et au moins un précurseur ionique de molybdène à une solution contenant un polyol et un composé soufré à une température comprise entre 150 et 250°C. Le polyol est de préférence un alkylediol ayant de 2 à 8 atomes de carbone tel que le 1,4-butanediol, le 1,3-propanediol ou encore l'éthylène glycol. De préférence, le polyol est l'éthylène glycol.

Le précurseur ionique de molybdène peut être par exemple choisi parmi l'heptamolybdate d'ammonium, le tétramolybdate d'ammonium, le tétrathiomolybdate d'ammonium. Il est de préférence l'heptamolybdate d'ammonium.

Le composé soufré peut être du soufre élémentaire, du sulfure d'ammonium, de la thiourée ou toute autre source de sulfure. Il est de préférence le soufre élémentaire.

Le mélange s'effectue à une température comprise entre 150 et 250 °C, de préférence comprise entre 180 et 220 °C.

Dans l'étape a"") on ajoute la solution ainsi obtenue (contenant le molybdène) à la solution contenant le sulfure de zinc, laquelle est préalablement préchauffée à une température comprise entre 150 et 250 °C, de préférence comprise entre 180 et 220 °C, de manière à obtenir une composition comprenant un mélange d'un précipité de sulfure de zinc et d'un précipité de sulfure de molybdène. De préférence, la température de la solution contenant le molybdène est identique à la solution contenant le sulfure de zinc. Le polyol utilisé dans les deux solutions peut être identique ou différent, de préférence il est identique.

Afin d'obtenir une composition comprenant un mélange d'un précipité de sulfure de zinc et d'un précipité de sulfure de molybdène, la réaction est de préférence conduite à reflux, de préférence pendant plusieurs heures et sous atmosphère inerte (par exemple sous azote).

Dans l'étape b), la composition comprenant le mélange de précipités est ensuite séparée de la solution, de préférence par centrifugation, puis éventuellement lavée, par exemple à l'alcool tel que l'éthanol, et finalement séchée, de préférence sous flux d'un gaz inerte (par exemple sous azote) et de préférence à température ambiante.

Afin d'obtenir une bonne cristallinité de la composition, il est ensuite nécessaire de lui faire subir un traitement sulfo-réducteur (étape c)) en présence d'un flux contenant de l'H₂S et du dihydrogène. La sulfuration s'effectue à une température comprise entre 500 et 900 °C et plus préférentiellement entre 600 et 800 °C. La durée de la sulfuration est généralement comprise entre 0,5 heures et 5 heures, de préférence entre 0,5 et 2 heures. On emploi par exemple un flux contenant 15 % en volume l'H₂S et 85 % en volume de dihydrogène.

La composition selon l'invention peut comprendre en outre au moins un métal du groupe VIII et/ou du groupe IB sous forme sa métallique ou sulfure. Ainsi, le procédé de préparation de la composition selon l'invention peut comprendre, après l'étape c) une étape supplémentaire, dans laquelle on dépose au moins un métal du groupe VIII et/ou du groupe IB sur la composition. Le dépôt du métal du groupe VIII et/ou du groupe IB peut être effectué par toute méthode connue de l'homme du métier telle que l'imprégnation à sec, l'imprégnation en excès, le greffage ou le dépôt par photoréduction. Le dépôt du métal du groupe VIII et/ou du groupe IB est généralement effectué en surface de la composition.

Selon une première variante préférée, ce dépôt d'au moins un métal du groupe VIII et/ou du groupe IB est effectué par le dépôt par photoréduction. On pourra tirer avantage de cette méthode par le fait que le dispositif pour les réactions photocatalytiques peut être identique au dispositif de photoréduction.

Ainsi, après l'étape c), on effectue une étape de dépôt d'au moins un métal du groupe VIII et/ou du groupe IB sur la composition par photoréduction de manière à obtenir ledit métal sous sa forme métallique, ladite étape de dépôt étant effectuée en mettant en contact la composition obtenue à l'étape c) avec une solution aqueuse contenant un agent sacrificiel donneur d'électron et un précurseur du métal du groupe VIII ou du groupe IB sous rayonnement ultra-violet, puis on sépare ladite composition de la solution aqueuse, on lave éventuellement ladite composition, et on sèche ladite composition.

Le métal déposé sur la composition est sélectionné parmi ceux des groupes VIII et IB de la classification périodique des éléments. De manière préférée, le métal est le platine, le palladium, l'or, le nickel, le cobalt, le ruthénium ou le rhodium. Le sel précurseur du métal est généralement sélectionné dans le groupe constitué par les chlorures, les nitrates et les sulfates. De manière préférée, le sel précurseur de métal est un chlorure ou un nitrate.

La composition est mise en agitation dans un réacteur en verre sous forme de suspension dans une solution aqueuse contenant un agent sacrificiel donneur d'électron et un sel précurseur du métal du groupe VIII et/ou du groupe IB. L'agent sacrificiel peut-être toute espèce organique ou minérale soluble dans l'eau donneuse d'électron. De manière préférée, l'agent sacrificiel est un alcool. De manière très préférée, l'agent sacrificiel est le méthanol. Le ratio volumique entre l'agent sacrificiel et l'eau est compris entre 0,001 et 0,9, de manière préférée compris entre 0,02 et 0,1. La concentration du sel précurseur en solution est calculée afin de déposer entre 0,01 et 5% en masse de métal sur la composition, de manière préférée entre 0,1 et 2% en masse de métal. La suspension est laissée sous agitation et sous rayonnement ultra-violet, généralement pendant 0,5 heures à 6 heures, de manière préférée de 1 à 3 heures. Après réaction, le solide obtenu est séparé, par exemple par filtration ou centrifugation, éventuellement lavé, et enfin séché afin d'éliminer toute ou une partie de l'eau introduite lors de l'imprégnation, généralement à une température comprise entre 50 et 250 °C, de manière préférée comprise entre 70 °C et 200 °C. Le séchage peut être effectué sous air, ou sous atmosphère inerte (azote par exemple), généralement pendant 6 heures à 48 heures, de manière préférée de 12 heures à 24 heures.

Éventuellement, si on souhaite obtenir une composition comprenant au moins un métal du groupe VIII et/ou du groupe IB sous sa forme sulfure, la composition est soumise, après l'étape de dépôt dudit métal, à une sulfuration en présence d'un flux contenant de l'H₂S et de l'hydrogène de manière à obtenir ledit métal sous sa forme sulfure. La sulfuration s'effectue à une température comprise entre 500 et 900 °C et plus préférentiellement entre 600 et 800 °C. La durée de la sulfuration est généralement comprise entre 0,5 heures et 5 heures, de préférence entre 0,5 et 2 heures. On emploi par exemple un flux contenant 15 % en volume l'H₂S et 85 % en volume de dihydrogène.

Selon une autre variante préférée, le dépôt d'au moins un métal du groupe VIII et/ou du groupe IB est effectué par imprégnation à sec. L'imprégnation à sec consiste à mettre en contact la composition avec la solution aqueuse contenant le sel précurseur du métal du groupe VIII et/ou du groupe IB avec un volume égal au volume poreux de la composition à imprégner.

Ainsi, après l'étape c), on effectue une étape de dépôt d'au moins un métal du groupe VIII et/ou du groupe IB sur la composition par imprégnation à sec, ladite étape de dépôt étant effectuée en mettant en contact la composition obtenue à l'étape c) avec une solution aqueuse d'un sel précurseur du métal du groupe VIII et/ou du groupe IB, puis on sèche ladite composition et on calcine ladite composition, puis soit on réduit ladite composition en présence d'un gaz réducteur de manière à obtenir ledit métal sous sa forme métallique, soit on soumet ladite composition à une sulfuration en présence d'un flux contenant de l'H₂S et de l'hydrogène de manière à obtenir ledit métal sous sa forme sulfure.

Le métal déposé sur la composition est sélectionné parmi ceux des groupes VIII et IB de la classification périodique des éléments. De manière préférée, le métal est le platine, le palladium, l'or, le nickel, le cobalt, le ruthénium ou le rhodium. Le sel précurseur du métal est généralement sélectionné dans le groupe constitué par les chlorures, les nitrates et les sulfates. De manière préférée, le sel précurseur de métal est un chlorure ou un nitrate. Un volume de sel précurseur en solution aqueuse correspondant au volume poreux du solide préparé est imprégné goutte à goutte à température ambiante. Le volume poreux total est mesuré par porosimétrie au mercure selon la norme ASTM D4284-92 avec un angle de mouillage de 140°, par exemple au moyen d'un appareil modèle Autopore III de la marque Microméritics™. La concentration du sel précurseur du métal du groupe VIII ou du groupe IB dans la solution aqueuse est calculée de telle sorte que la concentration finale en métal soit comprise entre 0,01% et 5% en masse sur la composition, de manière préférée entre 0,1 et 2% en masse de métal.

La composition imprégnée est ensuite séchée afin d'éliminer toute ou une partie de l'eau introduite lors de l'imprégnation, de préférence à une température comprise entre 50 et 250 °C, de manière plus préférée entre 70 °C et 200 °C. Le séchage peut être effectué sous air, ou sous atmosphère inerte (azote par exemple).

La composition est ensuite calcinée sous flux gazeux, de manière préférée sous air, sous hydrogène, sous azote ou un mélange d'au moins deux de ces gaz à une vitesse spatiale horaire (VVH) comprise entre 100 et 5000 h⁻¹, la vitesse spatiale horaire (VVH) étant définie comme volume de charge/volume de catalyseur/heure. La température de calcination est généralement comprise entre 150 °C et 900 °C, de préférence comprise entre 200 °C et 500 °C. La durée de calcination est généralement comprise entre 0,5 heures et 24 heures, de manière préférée de 1 heure à 12 heures. L'étape de calcination peut être opérée par palier de température, jusqu'à la température de consigne maximale définie.

La composition est ensuite généralement réduite sous flux gazeux comprenant entre 25 vol% et 100 vol% d'un gaz réducteur, de préférence 100 vol% d'un gaz réducteur. Le gaz réducteur est de préférence le dihydrogène. De manière préférée, cette étape est effectuée à une température comprise entre 50 °C et 500 °C, de manière encore plus préférée comprise entre 80°Cet 450°C.

Éventuellement, si on souhaite obtenir une composition comprenant au moins un métal du groupe VIII et/ou du groupe IB sous sa forme sulfure, la composition est soumise, après l'étape le dépôt dudit métal et à la place d'une réduction sous un gaz réducteur, à une sulfuration en présence d'un flux contenant de l'H₂S et de l'hydrogène de manière à obtenir ledit métal sous sa forme sulfure. La sulfuration s'effectue à une température comprise entre 500 et 900 °C et plus préférentiellement entre 600 et 800 °C. La durée de la sulfuration est généralement comprise entre 0,5 heures et 5 heures, de préférence entre 0,5 et 2 heures. On emploie par exemple un flux contenant 15 % en volume l'H₂S et 85 % en volume de dihydrogène.

### Utilisation en photocatalyse : procédé de production d'hydrogène

L'invention porte également sur l'utilisation de la composition selon l'invention comme photocatalyseur, et notamment comme photocatalyseur pour la production de dihydrogène à partir d'eau (H₂O) et/ou de sulfure d'hydrogène (H₂S) et/ou toute autre source de protons.

Plus particulièrement, l'invention porte sur un procédé de production d'hydrogène dans lequel on met en contact une charge comprenant de l'eau et/ou du sulfure d'hydrogène et/ou toute autre source de protons avec une composition selon l'invention en présence d'un rayonnement émettant au moins une gamme de longueur d'onde supérieure à 280nm, de manière à produire un effluent contenant du dihydrogène.

La mise en oeuvre du procédé de production de dihydrogène peut se faire en milieu liquide ou gazeux. Ainsi, la charge comprenant de l'eau et/ou du sulfure d'hydrogène et/ou toute autre source de protons est sous forme liquide et/ou gazeuse. Il n'est pas nécessaire de disposer de réactifs purs. Par exemple, le milieux liquide peut contenir des ions solvatés (Na⁺, K⁺, S²⁻, CO₃²⁻, Cl⁻, Br⁻, NO₃⁻, ...) ou en milieux gazeux des espèces carbonées ou ne contenant pas d'hydrogène peuvent être présentes (CO, CO₂, COS, CH₄, N₂, ...).

La charge d'eau peut être de l'eau distillée ou de l'eau contenant des ions ou des polluants (eaux de mer, eaux fluviales, eaux pluviales, eaux usées industrielles, agricoles ou domestiques, ...).

La charge de sulfure d'hydrogène peut être un effluent gazeux ou liquide industriel ou naturel ou encore une solution contenant du Na₂S.

D'autres sources de protons sont par exemple des alcools, notamment des alcools aliphatiques ou aromatiques, tels que le méthanol, l'éthanol ou le phénol, ou encore des acides carboxyliques tel que l'acide acétique, l'acide citrique...

La mise en oeuvre du procédé de production de dihydrogène peut se faire dans tous types de réacteurs adaptés à une réaction photocatalytique. Ainsi, la mise en oeuvre peut se faire dans des réacteurs totalement en verre ou disposant de fenêtres optiques non absorbantes afin de permettre au rayonnement d'atteindre la surface du photocatalyseur. Le type de technologie de réacteur pour la mise en oeuvre du photocatalyseur est généralement adapté à une suspension. Ce type de technologie est aussi appelé "slurry" selon la terminologie anglo-saxonne. Le type de technologie de réacteur peut encore être de type panneau solaire avec lit léchant ou traversant sur support poreux ou non poreux.

Le rayonnement émet au moins une gamme de longueur d'onde supérieure à 280 nm, de préférence de 315 nm à 800 nm, ce qui inclut le spectre UV et/ou le spectre visible. Le rayonnement peut être tout rayonnement UV-visible tel que la lumière naturelle du soleil, une lampe de type Hg, une lampe de type Xe, une lampe de type LED. De préférence, le rayonnement est la lumière naturelle du soleil.

La puissance lumineuse est comprise entre 1 et 50 mW/cm², de manière préférée comprise entre 1 et 35 mW/cm².

Le procédé de production d'hydrogène a l'avantage de pouvoir être effectué à des conditions opératoires très douces, notamment à température ambiante et/ou à pression atmosphérique. Il peut également être effectué à des températures et pressions plus élevées.

Dans le cas du dépôt par photoréduction de l'eau par exemple, il est possible de produire du dihydrogène (H₂) à température ambiante et sous pression atmosphérique en plaçant le photocatayseur selon l'invention en suspension dans un réacteur en quartz rempli d'eau. L'ensemble de la suspension est irradié par une source lumineuse UV-Visible.

Dans le cas du traitement de gaz de raffinerie contenant de l'hydrogène sulfuré et provenant des unités de désulfuration, la composition du gaz à traiter est en moyenne la suivante avant lavage aux amines : 1% en masse H₂, 15% en masse C₁, 18% en masse C₂, 14% en masse C₃, 13% en masse C₄, 5% en masse C₅⁺, 34% en masse H₂S. Lorsque le gaz à traiter a subi un lavage aux amines, la composition est en moyenne la suivante : 2,5% en masse H₂O et 97,5% en masse H₂S. En mettant en oeuvre le procédé selon l'invention, il est alors possible de convertir l'H₂S et éventuellement l'H₂O contenu dans ces gaz de raffinerie en dihydrogène à la température d'arrivée des gaz, soit de 20 °C à 100 °C, et à pression ambiante.

L'invention est illustrée par les exemples suivants qui ne présentent, en aucun cas, un caractère limitatif.

### EXEMPLES

### Exemple 1 : Photocatalyseur A (non conforme à l'invention) : TiO₂

Du dioxyde de titane commercial (TiO₂ AEROXIDE® TiO₂ P 25^{™}) présentant une surface spécifique de 50 m²/g et une taille moyenne de particule de 21 nm a été utilisé tel quel en tant que photocatalyseur A.

### Exemple 2 : Photocatalyseur B (non conforme à l'invention) : TiO₂ + Pt

0,0712 g de H₂PtCl₆,6H₂O (37,5% en masse de métal) est inséré dans 500 mL d'eau distillée. 50 mL de cette solution sont prélevés et insérés dans un réacteur double enveloppe en verre. 3 mL de méthanol puis 250 mg de catalyseur A sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minutes afin de récupérer le solide. Deux lavages sont ensuite effectués à l'eau, chacun des lavages étant suivi d'une centrifugation. La poudre récupérée est enfin placée dans une étuve à 110 °C pendant 24 heures. On obtient alors le photocatalyseur B.

La teneur en métal Pt est mesurée par spéctrométrie d'émission atomique à source plasma (ou inductively coupled plasma atomic émission spectroscopy "ICP-AES " selon la terminologie anglo-saxonne) à 0,93 % en masse.

### Exemple 3 : Photocatalyseur C (non conforme à l'invention) : TiO₂ + Ru

0,0529 g de RuCl₃,xH₂O est inséré dans 500 mL d'eau distillée. 50 mL de cette solution sont prélevés et insérés dans un réacteur double enveloppe en verre. 3 mL de méthanol puis 250 mg de photocatalyseur A sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minutes afin de récupérer le solide. Deux lavages sont ensuite effectués à l'eau, chacun des lavages étant suivi d'une centrifugation. La poudre récupérée est enfin placée dans une étuve à 110 °C pendant 24 heures. On obtient alors le photocatalyseur C.

La teneur en métal Ru est mesurée par ICP-AES à 0,25 % en masse.

### Exemple 4 : Photocatalyseur D (non conforme à l'invention) : ZnS

Du sulfure de zinc commercial (ZnS, 99,99%) présentant une taille moyenne de particule de 10 µm a été utilisé tel quel en tant que photocatalyseur D.

### Exemple 5 : Photocatalyseur E (non conforme à l'invention) : ZnS + Ru

0,0529 g de RuCl₃,xH₂O est inséré dans 500 mL d'eau distillée. 50 mL de cette solution sont prélevés et insérés dans un réacteur double enveloppe en verre. 3 mL de méthanol puis 250 mg de photocatalyseur D sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minutes afin de récupérer le solide. Deux lavages sont ensuite effectués, à l'eau, chacun des lavages étant suivi d'une centrifugation. La poudre récupérée est enfin placée dans une étuve à 110 °C pendant 24 heures. On obtient alors le photocatalyseur E.

La teneur en métal Ru est mesurée par ICP-AES à 0,20 % en masse.

### Exemple 6 : Photocatalyseur F (non conforme à l'invention) : ZnS + MoS₂, ratio Mo/Zn=2

Dans une première étape, on mélange 50 mL d'une solution aqueuse de sulfure de sodium (0.1 M) à 100 mL d'une solution aqueuse de nitrate de zinc (0.1 M). Le précipité de sulfure de ZnS formé est séparé par centrifugation 5 min à 3000 t/min puis lavé à l'éthanol deux fois avant d'être dispersé dans de l'éthylène glycol. La concentration en ZnS de la solution finale est de 0.1 M. Dans une deuxième étape, on prépare trois solutions :
- 20 mL d'une solution A contenant du soufre élémentaire à 2 M dissout dans 20 mL d'éthylène glycol (EG) à 200 °C sous agitation, et flux d'azote, 10 mL d'une solution B contenant de l'heptamolybdate d'ammonium, (NH₄)₆Mo₇O₂₄.4H₂O à 0.56 M dissout dans de l"EG à 200 °C,
- 20 mL de la solution C de la première étape contenant les nanoparticules de ZnS également chauffée à 200 °C.

Les trois solutions sont mélangées et homogénéisées à 200 °C selon la séquence : la solution A est ajoutée à la solution B et à ce mélange est ensuite ajouté la solution C. La réaction est ensuite conduite à 200 °C à reflux pendant 3h sous débit d'azote et ce jusqu'à apparition d'un précipité brun-noir. Ce précipité est séparé par centrifugation, lavé à l'éthanol et finalement séché sous flux d'azote à température ambiante. Il subit ensuite un traitement sulfo-réducteur à une température de 750 °C pendant 1 h sous un flux d'H₂/H₂S à 15/85%vol/vol.

On obtient alors le photocatalyseur F, présentant un rapport molaire Mo/Zn=2.

### Exemple 7 : Photocatalyseur G (conforme à l'invention) : ZnS + MoS₂, ratio Mo/Zn=1

Dans une première étape, on mélange 50 mL d'une solution aqueuse de sulfure de sodium (0.1 M) à 100 mL d'une solution aqueuse de nitrate de zinc (0.1 M). Le précipité de sulfure de ZnS formé est séparé par centrifugation 5 min à 3000 t/min puis lavé à l'éthanol deux fois avant d'être dispersé dans de l'éthylène glycol. La concentration en ZnS de la solution finale est de 0.1 M. Dans une deuxième étape, on prépare trois solutions :
- 20 mL d'une solution A contenant du soufre élémentaire à 2 M dissout dans 20 mL d'éthylène glycol (EG) à 200°C sous agitation, et flux d'azote, 10 mL d'une solution B contenant de l'heptamolybdate d'ammonium, (NH₄)₆Mo₇O₂₄.4H₂O à 0.56 M dissout dans de l'EG à 200 °C,
- 40 mL de la solution C de la première étape contenant les nanoparticules de ZnS également chauffée à 200 °C.

Les trois solutions sont mélangées et homogénéisées à 200 °C selon la séquence : la solution A est ajoutée à la solution B et à ce mélange est ensuite ajouté la solution C. La réaction est ensuite conduite à 200 °C à reflux pendant 3h sous débit d'azote et ce jusqu'à apparition d'un précipité brun-noir. Ce précipité est séparé par centrifugation, lavé à l'éthanol et finalement séché sous flux d'azote à température ambiante. Afin d'obtenir une bonne cristallinité du matériau, il est nécessaire de lui faire subir un traitement sulfo-réducteur à une température de 750 °C pendant 1 h sous un flux d'H₂/H₂S à 15/85%vol/vol.

On obtient alors le photocatalyseur G, présentant un rapport molaire Mo/Zn=1.

### Exemple 8 : Photocatalyseur H (conforme à l'invention) : ZnS + MoS₂, ratio Mo/Zn=1 + Ru

0,0529 g de RuCl₃,xH₂O est inséré dans 500 mL d'eau distillée. 50 mL de cette solution sont prélevés et insérés dans un réacteur double enveloppe en verre. 3 mL de méthanol puis 250 mg de photocatalyseur G sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minutes afin de récupérer le solide. Deux lavages sont ensuite effectués, à l'eau, chacun des lavages étant suivi d'une centrifugation. La poudre récupérée est enfin placée dans une étuve à 110 °C pendant 24 heures. On obtient alors le photocatalyseur E.

La teneur en métal Ru est mesurée par ICP-AES à 0,20 % en masse.

### Exemple 9 : Évaluation des photocatalyseurs en production de dihydrogène avec solution Na₂S

Les photocatalyseurs A, B, C, D, E, F, G et H sont soumis à un test photocatalytique de production de dihydrogène dans un réacteur semi-ouvert agité en pyrex muni d'une double enveloppe pour réguler la température de test. Pour ce faire, 1 à 5g/L de photocatalyseur sont mis en suspension dans 50mL d'une solution aqueuse de Na₂S à pH 13.

Les tests sont réalisés à 25°C sous pression atmosphérique avec un débit d'argon de 5 ml/min pour entrainer le gaz dihydrogène produit lequel est analysé par chromatographie en phase gazeuse. La source d'irradiation UV-Visible est fournie par une lampe Xe-Hg de puissance 300W (Asahi™, MAX302™). La durée du test est de 20 heures.

Les activités photocatalytiques sont exprimées en µmol de dihydrogène produit par heure et par gramme de photocatalyseur. La stabilité des photocatalyseurs est exprimée par une perte d'activité en pourcentage, calculée selon la formule suivante: ((activité initiale - activité à 20h)/activité initiale) x 100. Les résultats sont reportés dans le tableau. Les valeurs d'activité et de perte d'activité montrent que les catalyseurs selon l'invention sont ceux qui présentent systématiquement les meilleures performances.

**Tableau : Résultats en production de dihydrogène**

| Photocatalyseur | | Masse insérée (g) | Activité initiale (µmol/h/g) | Activité à 20 h de test (µmol/h/g) | Perte d'activité (%) |
|---|---|---|---|---|---|
| A (non conforme) | TiO₂ | 0,05 | 0 | 0 | - |
| B (non-conforme) | TiO₂ + Pt | 0,10 | 87,5 | 25 | 71 |
| C (non-conforme) | TiO₂ + Ru | 0,05 | 0 | 0 | - |
| D (non conforme) | ZnS | 0,25 | 16,5 | 3,6 | 78 |
| E (non-conforme) | ZnS + Ru | 0,05 | 95 | 42,5 | 55 |
| F (non-conforme) | ZnS + MoS₂, ratio Mo/Zn = 2 | 0,22 | 0 | 0 | - |
| G (conforme) | ZnS + MoS₂, ratio Mo/Zn = 1 | 0,04 | 45,7 | 36,6 | 20 |
| H (conforme) | ZnS + MoS₂, ratio Mo/Zn = 1 + Ru | 0,05 | 108 | 93 | 14 |

## Revendications

1. Composition comprenant un mélange de sulfure de zinc et de sulfure de molybdène, dans laquelle le ratio molaire Mo/Zn est compris entre 0,01 et 1,9.

2. Composition selon la revendication 1, dans laquelle le ratio molaire Mo/Zn est compris entre 0,5 et 1,5.

3. Composition selon les revendications 1 ou 2, dans laquelle le mélange de sulfure de zinc et de sulfure de molybdène est sous forme de nanoparticules dont la taille est inférieure à 1 µm.

4. Composition selon les revendications 1 à 3, comprenant en outre au moins un métal du groupe VIII et/ou du groupe IB sous sa forme métallique ou sulfure.

5. Composition selon la revendication 4, dans laquelle le métal du groupe VIII et/ou du groupe IB est choisi parmi le platine, le palladium, l'or, le nickel, le cobalt, le ruthénium ou le rhodium.

6. Composition selon les revendications 4 ou 5, dans laquelle la teneur du métal du groupe VIII et/ou du groupe IB est comprise entre 0,01 et 5 % en masse de métal sur la composition.

7. Procédé de préparation de la composition selon les revendications 1 à 3 comprenant les étapes suivantes :
a) on précipite un précurseur de molybdène en présence d'un composé soufré et de sulfure de zinc dans un solvant comprenant un polyol à une température comprise entre 150 et 250 °C, de manière à obtenir une solution contenant une composition comprenant un mélange d'un précipité de sulfure de zinc et d'un précipité de sulfure de molybdène,
b) on sépare la composition obtenue à l'étape a) de la solution, puis on lave éventuellement ladite composition, et on sèche ladite composition,
c) on sulfure la composition obtenue à l'étape b) en présence d'un flux contenant de l'H₂S et de l'hydrogène.

8. Procédé de préparation de la composition selon la revendication 7, dans lequel le polyol est un alkylediol ayant de 2 à 8 atomes de carbone.

9. Procédé de préparation de la composition selon les revendications 7 ou 8, dans lequel, après l'étape c), on effectue une étape de dépôt d'au moins un métal du groupe VIII et/ou du groupe IB sur la composition par photoréduction de manière à obtenir ledit métal sous sa forme métallique, ladite étape de dépôt étant effectuée en mettant en contact la composition obtenue à l'étape c) avec une solution aqueuse contenant un agent sacrificiel donneur d'électron et un précurseur du métal du groupe VIII et/ou du groupe IB sous rayonnement ultra-violet, puis on sépare ladite composition de la solution aqueuse, on lave éventuellement ladite composition, et on sèche ladite composition.

10. Procédé de préparation de la composition selon la revendication 9, dans lequel la composition comprenant au moins un métal du groupe VIII et/ou du groupe IB sous sa forme métallique est soumise à une sulfuration en présence d'un flux contenant de l'H₂S et de l'hydrogène de manière à obtenir ledit métal sous sa forme sulfure.

11. Procédé de préparation du photocatalyseur selon les revendications 7 ou 8, dans lequel, après l'étape c), on effectue une étape de dépôt d'au moins un métal du groupe VIII et/ou du groupe IB sur la composition par imprégnation à sec, ladite étape de dépôt étant effectuée en mettant en contact la composition obtenue à l'étape c) avec une solution aqueuse d'un sel précurseur du métal du groupe VIII et/ou du groupe IB, puis on sèche ladite composition et on calcine ladite composition, puis soit on réduit ladite composition en présence d'un gaz réducteur de manière à obtenir ledit métal sous sa forme métallique, soit on soumet ladite composition à une sulfuration en présence d'un flux contenant de l'H₂S et de l'hydrogène de manière à obtenir ledit métal sous sa forme sulfure.

12. Utilisation de la composition selon les revendications 1 à 6 ou préparée selon les revendications 7 à 11 comme photocatalyseur.

13. Procédé de production d'hydrogène dans lequel on met en contact une charge comprenant de l'eau et/ou du sulfure d'hydrogène et/ou toute autre source de protons avec une composition selon les revendications 1 à 6 ou préparée selon les revendications 7 à 11 en présence d'un rayonnement émettant au moins une gamme de longueur d'onde supérieure à 280 nm, de manière à produire un effluent contenant de l'hydrogène.

14. Procédé de production d'hydrogène selon la revendication 13, dans lequel la charge comprenant de l'eau et/ou du sulfure d'hydrogène et/ou toute autre source de protons est sous forme liquide et/ou gazeuse.

15. Procédé de production d'hydrogène selon les revendications 13 et 14, dans lequel la puissance du rayonnement est comprise entre 1 et 50 mW/cm².

## Patentansprüche

1. Zusammensetzung, umfassend ein Gemisch aus Zinksulfid und Schwefelsulfid und Molybdänsulfid, wobei das Mo/Zn-Molverhältnis im Bereich zwischen 0,01 und 1,9 liegt.

2. Zusammensetzung nach Anspruch 1, wobei das Mo/Zn-Molverhältnis im Bereich zwischen 0,5 und 1,5 liegt.

3. Zusammensetzung nach den Ansprüchen 1 oder 2, wobei das Gemisch aus Zinksulfid und Molybdänsulfid in Form von Nanopartikeln vorliegt, deren Größe weniger als 1 µm beträgt.

4. Zusammensetzung nach den Ansprüchen 1 bis 3, ferner umfassend mindestens ein Metall der Gruppe VIII und/oder der Gruppe IB in seiner Metall- oder Sulfidform.

5. Zusammensetzung nach Anspruch 4, wobei das Metall der Gruppe VIII und/oder der Gruppe IB ausgewählt ist aus Platin, Palladium, Gold, Nickel, Cobalt, Ruthenium oder Rhodium.

6. Zusammensetzung nach den Ansprüchen 4 oder 5, wobei der Gehalt an Metall der Gruppe VIII und/oder der Gruppe IB im Bereich zwischen 0,01 und 5 Gew.-% Metall, bezogen auf die Zusammensetzung, liegt.

7. Verfahren zur Herstellung der Zusammensetzung nach den Ansprüchen 1 bis 3, umfassend die folgenden Schritte:
a) Ausfällen eines Molybdänvorläufers in Gegenwart einer Schwefelverbindung und von Zinksulfid in einem Lösemittel, umfassend ein Polyol, bei einer Temperatur im Bereich zwischen 150 und 250 °C, um eine Lösung zu erhalten, die eine Zusammensetzung enthält, die ein Gemisch aus einem Zinksulfid-Ausfällungsprodukt und einem Molybdänsulfid-Ausfällungsprodukt umfasst,
b) Trennen der in Schritt a) erhaltenen Zusammensetzung von der Lösung, dann gegebenenfalls Waschen der Zusammensetzung und Trocknen der Zusammensetzung,
c) Aufschwefeln der in Schritt b) erhaltenen Zusammensetzung in Gegenwart eines Stroms, der H₂S und Wasserstoff enthält.

8. Verfahren zur Herstellung der Zusammensetzung nach Anspruch 7, wobei es sich bei dem Polyol um ein Alkyldiol mit 2 bis 8 Kohlenstoffatomen handelt.

9. Verfahren zur Herstellung der Zusammensetzung nach den Ansprüchen 7 oder 8, wobei, nach Schritt c) ein Schritt zum Abscheiden mindestens eines Metalls der Gruppe VIII und/oder der Gruppe IB auf der Zusammensetzung mittels Photoreduktion durchgeführt wird, um das Metall in seiner Metallform zu erhalten, wobei der Schritt zum Abscheiden durchgeführt wird, indem die in Schritt c) erhaltene Zusammensetzung mit einer wässrigen Lösung, die ein als Opfer-Elektronendonator wirkendes Mittel und einen Vorläufer des Metalls der Gruppe VIII und/oder der Gruppe IB enthält, unter ultravioletter Strahlung in Kontakt gebracht wird, dann die Zusammensetzung von der wässrigen Lösung getrennt wird, die Zusammensetzung gegebenenfalls gewaschen wird und die Zusammensetzung getrocknet wird.

10. Verfahren zur Herstellung der Zusammensetzung nach Anspruch 9, wobei die Zusammensetzung, die mindestens ein Metall der Gruppe VIII und/oder der Gruppe IB in seiner Metallform umfasst, einer Aufschwefelung in Gegenwart eines Stroms unterzogen wird, der H₂S und Wasserstoff enthält, um das Metall in seiner Sulfidform zu erhalten.

11. Verfahren zur Herstellung des Photokatalysators nach den Ansprüchen 7 oder 8, wobei, nach dem Schritt c) ein Schritt zur Abscheidung mindestens eines Metalls der Gruppe VIII und/oder der Gruppe IB auf der Zusammensetzung mittels trockener Imprägnierung durchgeführt wird, wobei der Schritt zur Abscheidung durchgeführt wird, indem die in Schritt c) erhaltene Zusammensetzung mit einer wässrigen Lösung eines Vorläufersalzes des Metalls der Gruppe VIII und/oder der Gruppe IB in Kontakt gebracht wird, die Zusammensetzung dann getrocknet wird und die Zusammensetzung kalziniert wird, die Zusammensetzung dann entweder in Gegenwart eines Reduktionsgases reduziert wird, um das Metall in seiner Metallform zu erhalten, oder die Zusammensetzung einer Aufschwefelung in Gegenwart eines Stroms unterzogen wird, der H₂S und Wasserstoff enthält, um das Metall in seiner Sulfidform zu erhalten.

12. Verwendung der Zusammensetzung nach den Ansprüchen 1 bis 6 oder hergestellt gemäß den Ansprüchen 7 bis 11 als Photokatalysator.

13. Verfahren zur Erzeugung von Wasserstoff, wobei ein Einsatz, umfassend Wasser und/oder Schwefelwasserstoff und/oder jede andere Protonenquelle, mit einer Zusammensetzung nach den Ansprüchen 1 bis 6 oder hergestellt nach den Ansprüchen 7 bis 11, in Gegenwart einer Strahlung, die mindestens einen Wellenlängenbereich größer 280 nm emittiert, in Kontakt gebracht wird, um einen Abfluss herzustellen, der Wasserstoff enthält.

14. Verfahren zur Erzeugung von Wasserstoff nach Anspruch 13, wobei der Einsatz, umfassend Wasser und/oder Schwefelwasserstoff und/oder jede andere Protonenquelle, in flüssiger und/oder gasförmiger Form vorliegt.

15. Verfahren zur Erzeugung von Wasserstoff nach den Ansprüchen 13 und 14, wobei die Strahlungsleistung im Bereich zwischen 1 und 50 mW/cm² liegt.

## Claims

1. A composition comprising a mixture of zinc sulphide and molybdenum sulphide, in which the Mo/Zn molar ratio is in the range 0.01 to 1.9.

2. The composition according to claim 1, in which the Mo/Zn molar ratio is in the range 0.5 to 1.5.

3. The composition according to claim 1 or claim 2, in which the mixture of zinc sulphide and molybdenum sulphide is in the form of nanoparticles less than 1 µm in size.

4. The composition according to claims 1 to 3, further comprising at least one metal from group VIII and/or group IB in its metallic or sulphide form.

5. The composition according to claim 4, in which the metal from group VIII and/or group IB is selected from platinum, palladium, gold, nickel, cobalt, ruthenium or rhodium.

6. The composition according to claim 4 or claim 5, in which the quantity of metal from group VIII and/or group IB is in the range 0.01% to 5% by weight of metal on the composition.

7. A process for the preparation of the composition according to claims 1 to 3, comprising the following steps:
a) precipitating a molybdenum precursor in the presence of a sulphur-containing compound and zinc sulphide in a solvent comprising a polyol at a temperature in the range 150°C to 250°C, in order to obtain a solution containing a composition comprising a mixture of a precipitate of zinc sulphide and a precipitate of molybdenum sulphide;
b) separating the composition obtained in step a) from the solution, then optionally washing said composition, and drying said composition;
c) sulphurizing the composition obtained in step b) in the presence of a stream containing H₂S and hydrogen.

8. The process for preparing the composition according to claim 7, in which the polyol is an alkyldiol containing 2 to 8 carbon atoms.

9. The process for preparing the composition according to claim 7 or claim 8 in which, after step c), a step is carried out for depositing at least one metal from group VIII and/or group IB onto the composition by photoreduction so as to obtain said metal in its metallic form, said deposition step being carried out by bunging the composition obtained in step c) into contact with an aqueous solution containing a sacrificial electron donor agent and a precursor of the metal from group VIII and/or group IB under ultraviolet radiation, then separating said composition from the aqueous solution, optionally washing said composition, and drying said composition.

10. The process for preparing the composition according to claim 9, in which the composition comprising at least one metal from group VIII and/or group IB in its metallic form undergoes sulphurization in the presence of a stream containing H₂S and hydrogen in order to obtain said metal in its sulphide form.

11. A process for the preparation of a photocatalyst according to claim 7 or claim 8 in which, after step c), a step is carried out for depositing at least one metal from group VIII and/or group IB onto the composition by dry impregnation, said deposition step being carried out by bringing the composition obtained in step c) into contact with an aqueous solution of a precursor salt of a metal from group VIII and/or group IB, then drying said composition and calcining said composition, then either reducing said composition in the presence of a reducing gas in order to obtain said metal in its metallic form, or said composition undergoes sulphurization in the presence of a stream containing H₂S and hydrogen so as to obtain said metal in its sulphide form.

12. Use of the composition according to claims 1 to 6 or prepared in accordance with claims 7 to 11, as a photocatalyst.

13. A process for the production of hydrogen, in which a feed comprising water and/or hydrogen sulphide and/or any other source of protons is brought into contact with a composition according to claims 1 to 6 or prepared in accordance with claims 7 to 11 in the presence of radiation emitting in at least one wavelength range above 280 nm, in order to produce an effluent containing hydrogen.

14. The process for the production of hydrogen according to claim 13, in which the feed comprising water and/or hydrogen sulphide and/or any other source of protons is in the liquid and/or gaseous form.

15. The process for the production of hydrogen according to claim 13 or claim 14, in which the output of the radiation is in the range 1 to 50 mW/cm².
